# EUROPÄISCHE PATENTSCHRIFT

(11) **EP 4 107 592 B1**
(45) Veröffentlichungstag und Bekanntmachung des Hinweises auf die Patenterteilung: **27.09.2023**
(21) Anmeldenummer: 21706917.8
(22) Anmeldetag: 18.02.2021
(51) Int. Cl.: G05B 19/042, G06F 21/60, H04L 9/08, H04W 4/40, H04W 12/10

(54) **VERFAHREN ZUR HERSTELLUNG EINES SOFTWAREKOPIERSCHUTZES FÜR EIN LENKUNGSSTEUERGERÄT IN EINEM FAHRZEUG, LENKUNGSSTEUERGERÄT UND COMPUTERPROGRAMMPRODUKT**
METHOD FOR PRODUCING SOFTWARE COPY PROTECTION FOR A STEERING CONTROL DEVICE IN A VEHICLE, STEERING CONTROL DEVICE AND COMPUTER PROGRAM PRODUCT
PROCÉDÉ POUR PRODUIRE UNE PROTECTION DE COPIE DE LOGICIEL POUR UN DISPOSITIF DE COMMANDE DE DIRECTION DANS UN VÉHICULE, DISPOSITIF DE COMMANDE DE DIRECTION ET PRODUIT PROGRAMME D'ORDINATEUR

(30) Priorität: 19.02.2020 DE 102020202155
(43) Veröffentlichungstag der Anmeldung: 28.12.2022
(73) Patentinhaber: VOLKSWAGEN AKTIENGESELLSCHAFT, 38440 Wolfsburg (DE)
(72) Erfinder: NEUBAUER, Marc, 38159 Vechelde GT Sierße (DE)
(86) Internationale Anmeldenummer: PCT/EP2021/054021
(87) Internationale Veröffentlichungsnummer: WO 2021/165393

(56) Entgegenhaltungen:
- DE-A1- 10 020 977
- DE-A1- 10 238 095
- DE-A1-102006 015 212
- DE-A1-102015 202 935
- US-A1- 2019 149 324

## Beschreibung

Die Erfindung betrifft ein Verfahren zur Herstellung eines Softwarekopierschutzes für ein Steuergerät in einem Fahrzeug sowie eine Lenkungsbaugruppenanordnung mit einem Lenkungssteuergerät, ein Computerprogrammprodukt und ein Steuergerät.

In heutigen Fahrzeugen sind zahlreiche Steuergeräte für jeweilige funktionelle Bereiche beziehungsweise für jeweilige Komponenten in diesen Bereichen vorgesehen, welche mittels einer zugehörigen Steuergerätesoftware entsprechend gesteuert und verwendet werden können. In diesem Zusammenhang ist somit nicht nur die Anordnung von einzelnen Komponenten zu einer übergeordneten Baugruppenanordnung entscheidend für die gewünschte Funktionalität des Fahrzeugs in diesem Bereich, sondern erst die Steuergerätesoftware ermöglicht es mitunter eine hochindividuelle und neuartige Funktionalität in dem Fahrzeug bereitzustellen. Es ist bereits bekannt, dass zumindest Teilbereiche von derartigen Softwareprodukten immer wieder auch kopiert und anschließend in nichtberechtigten Nutzerkreisen für Fremdfahrzeuge eingesetzt werden. Insbesondere sind bereits Fälle bekannt, bei denen aus mehreren verschiedenen Baugruppenanordnungen und insbesondere deren jeweiliger Steuergerätesoftware, auch teilweise illegale Kopiervorgänge dazu verwendet werden, um anschließend aus den Fragmenten eine funktionierende Einheit zu erstellen. Ebenso sind Fälle bekannt, welche eine eins zu eins Kopie eines Steuergerätes umfassen. Diese Vorgänge basieren etwa auf einem Softwaredump, um anschließend eine uneingeschränkte Nutzung eines solchen Steuergeräts zu ermöglichen.

Grundsätzlich besteht die Möglichkeit, einen Hardwarekopierschutz mit einer entsprechenden Erweiterung durch sogenannte Censorship Modes (Censorship Modes = Zensur Modi) auf der Hardwareebene einzustellen. Ist dies aber durch den verwendeten Mikrocontroller beziehungsweise allgemein der Hardware nicht möglich, so kann dies nur durch spezifische Hardwaremethoden abgesichert werden, beispielsweise durch eine entsprechende Hardwarelayoutänderung. Der Nachteil dieser Änderungen besteht in einem erhöhten Aufwand bei Analysen von Feldschadensteilen. Einfache Softwarelösungen, wie beispielsweise Censorship Modes, sind unter Umständen auch kompromittierbar und nicht dauerhaft sicher gegen eine Übergehung beziehungsweise eine Manipulation.

Die zuvor genannten Zusammenhänge führen unmittelbar zu einem wirtschaftlichen Schaden, da zugehörige Entwicklungskosten, welche von einem kopierenden Hersteller eingespart werden, somit zu einer Wettbewerbsverzerrung führen.

DE 102 38 095 A1 offenbart ein Verfahren zum Schutz vor Manipulationen eines Steuergerätes für mindestens eine Kfz-Komponente. Das Steuergerät umfasst einen Microrechner und einen Speicherbaustein, der einen reversiblen Festwertspeicher darstellt. In diesem werden Daten abgelegt, die durch ein Verschlüsselungsverfahren verschlüsselt sind, und der verwendete Schlüssel ein Teil einer ursprünglichen bausteinspezifischen Kennung umfasst.

DE 10 2006 015 212 A1 offenbart ein Verfahren zum Schutz eines beweglichen Gutes gegen unberechtigte Benutzung. Es erfolgt eine kryptographische Authentifizierung des Gutes gegenüber einem externen Computersystem, wobei geprüft wird, ob eine Sperrung gespeichert ist.

DE 10 2015 202 935 A1 offenbart ein Verfahren zum Manipulationsschutz, wobei ein erstes Gerät und ein zweites Gerät verschlüsselt Datenpakete austauschen und eine Signatur zur Freigabe vergeben.

Der Erfindung liegt nun die Aufgabe zugrunde, ein alternatives Verfahren zur Herstellung eines Softwarekopierschutzes für ein Steuergerät in einem Fahrzeug bereitzustellen, welches ein zuverlässiges und einfach umzusetzendes Berechtigungsverfahren für eine Steuergerätesoftware eines Steuergeräts ermöglicht.

In bevorzugter Ausgestaltung der Erfindung ist vorgesehen, dass ein Verfahren zur Herstellung eines Softwarekopierschutzes für ein Steuergerät in einem Fahrzeug bereitgestellt wird. Solch ein Verfahren umfasst dabei die folgenden Schritte: Bereitstellen eines Steuergeräts mit einer spezifischen Steuergerätesoftware, wobei die Steuergerätesoftware eine Berechtigungsabfrageroutine zur Verwendung der Steuergerätesoftware umfasst, Einbauen des Steuergeräts in eine spezifische Baugruppenanordnung mit wenigstens einer Komponente in einem Fahrzeug und Koppeln des Steuergeräts mit der wenigstens einen Komponente, sodass eine erweiterte Baugruppenanordnung erstellt wird. Das Verfahren umfasst in dieser Ausführungsvariante zudem die weiteren folgenden Schritte: Auslesen einer eindeutigen Komponentenidentifikationskennung der wenigstens einen Komponente mittels des Steuergeräts, Hinterlegen der eindeutigen Komponentenidentifikationskennung der wenigstens einen Komponente auf dem Steuergerät, Bereitstellen eines Zugangscodes für eine Zugangsabfrageroutine eines Sonderspeicherbereichs des Steuergeräts basierend zumindest teilweise auf einer während des Einbauens des Steuergeräts erstellten eindeutigen Identifikationskennung der erweiterten Baugruppenanordnung, Erstellen eines Berechtigungscodes mittels eines Erstellungsprogramms der Steuergerätesoftware basierend auf dem Zugangscode und auf zumindest einen gemäß des Zugangscodes ausgewählten Teilbereichs der Komponentenidentifikationskennung der wenigstens einen Komponente, Speichern des Berechtigungscodes in dem Sonderspeicherbereich mit Zugangsabfrageroutine des Steuergeräts und Aktivieren der Berechtigungsabfrageroutine der Steuergerätesoftware in Verbindung mit dem Berechtigungscode und der hinterlegten Komponentenidentifikationskennung, sodass eine Berechtigung zur Verwendung der Steuergerätesoftware nur in Abhängigkeit einer Kenntnis des Zugangscodes und einer Verwendung des Berechtigungscodes ermöglicht wird. Auf diese Weise ist es möglich ein alternatives Verfahren zur Herstellung eines Softwarekopierschutzes für ein Steuergerät in einem Fahrzeug bereitzustellen, welches ein zuverlässiges und einfach umzusetzendes Berechtigungsverfahren für eine Steuergerätesoftware eines Steuergeräts ermöglicht. Der Zugangscode wird dabei individuell während der Fertigung bereitgestellt und ermöglicht später den Zugang zu dem Sonderspeicherbereich. Gleichzeitig ermöglicht der Zugangscode erst die Erstellung des Berechtigungscodes, welcher sich entsprechend aus wenigstens einem Teilbereich der Komponentenidentifikationskennung der wenigstens einen Komponente ergibt.

Dieser Querverweis verbindet somit auf vorteilhafte Weise den angestrebten Softwareschutz mit der erweiterten Baugruppenanordnung. Wenn mehrere Komponenten vorgesehen sind, stehen auch mehrere Komponentenidentifikationskennungen zur Verfügung, welche entsprechend der vorgestellten Vorgehensweise eingesetzt und gleichermaßen in dem Steuergerät hinterlegt werden. Die jeweiligen Komponentenidentifikationskennungen sind jede für sich dabei hochindividuell und eindeutig mit der jeweiligen Komponente verbunden und sind entsprechend schon vor dem Einbauen des Steuergeräts vorhanden. Somit kann eine Berechtigung der Steuerungssoftware und ein Softwarekopierschutz für ein Steuergerät in einem Fahrzeug auf einfache Weise und zuverlässig bereitgestellt werden. Die Berechtigung zur Verwendung der Steuergerätesoftware kann in diesem Zusammenhang so verstanden werden, dass auch ein Zugang zu einem entsprechenden Script und/oder Protokolle und/oder allgemein einer Notation der Steuerungssoftware nur mittels des vorgestellten Verfahrens möglich ist. Mit anderen Worten kann somit zuverlässig verhindert werden, dass die Steuerungssoftware mittels eines simplen Auslesevorgangs schlicht kopiert und dann für nicht vorgesehene Zwecke von einem nicht berechtigten Personenkreis illegal genutzt wird. Auch für den Fall, dass das Steuergerät aus der erweiterten Baugruppenanordnung zu einem spätere Zeitpunkt entnommen und von einem nicht berechtigten Personenkreis isoliert anderswo eingesetzt werden soll, bietet das vorgestellte Verfahren einen vorteilhaften Schutz. Da über den Berechtigungscode so etwas wie ein Abgleich mit den Daten der Komponenten stattfindet, wird dieser Vorgang bei einem Wechsel beziehungsweise einem Entfernen des Steuergeräts aus seiner vorhergesehenen Baugruppenanordnung fehlschlagen.

Darüber hinaus bietet solch ein Fehlschlagen weitere Möglichkeiten, wobei beispielsweise dann das Steuergerät beim Detektieren solch eines Vorgangs gesperrt und/oder deaktiviert werden kann. Gerade unter dem Aspekt einer Manipulation im Sinne eines Gewährleistungsfalls eröffnen sich basierend auf dem vorgestellten Verfahren zahlreiche weitere Möglichkeiten. Das vorgestellte Verfahren vereinigt mit anderen Worten eindeutige Inhalte und dynamische fertigungsbezogene Inhalte für die Schaffung einer Art Verschlüsselung, welches auch als Geheimnis bezeichnet werden kann, für die Berechtigungsabfrageroutine. Nach Einsammlung und Bearbeitung aller Informationen wird in der Fertigung der erweiterten Baugruppenanordnung eine Art Versiegelung dieses Geheimnisses durchgeführt, wobei an dieser Stelle der Sonderspeicherbereich eine zentrale Rolle spielt.

Erfindungsgemäß ist vorgesehen, dass das Erstellen des Berechtigungscodes mittels des Erstellungsprogramms der Steuergerätesoftware basierend auf dem Zugangscode und auf zumindest einen gemäß eines von dem Zugangscode vorgegebenen Zufallsprinzips ausgewählten Teilbereichs der Komponentenidentifikationskennung der wenigstens einen Komponente vollzogen wird. Auf diese Weise ist selbst bei Kenntnis von der Komponentenidentifikationskennung der wenigstens einen Komponente eine ungewollte Entschlüsselung des Berechtigungscodes von einem unberechtigten Teilnehmerkreis besonders erschwert bis unmöglich, sodass ein zuverlässiges und einfach umzusetzendes Berechtigungsverfahren für eine Steuergerätesoftware eines Steuergeräts ermöglicht wird.

Zudem ist vorgesehen, dass der Berechtigungscode zusätzlich in einem Redundanzspeicher von dem Steuergerät gespeichert wird, wobei ein Zugang zu diesem Redundanzspeicher ausschließlich einem Hersteller der erweiterten Baugruppenanordnung ermöglicht wird. In dem Falle, dass der Zugangscode nicht einsehbar oder sogar verloren gegangen ist, ist somit auf diese Weise immer noch zumindest ein Zugangsweg zur Steuerungssoftware möglich, um somit stets eine Funktionsweise der erweiterten Baugruppenanordnung zu ermöglichen. Auch könnte der Hersteller einem ausgewählten Kreis, beispielsweise seinen Vertragswerkstätten, somit einen zuverlässigen Zugang zur Steuerungssoftware ermöglichen, um somit beispielsweise zu ermöglichen, dass Wartungsarbeiten durchführbar sind.

In weiterer bevorzugter Ausgestaltung der Erfindung ist vorgesehen, dass eine Lenkungsbaugruppenanordnung mit einem Lenkungssteuergerät bereitgestellt wird, wobei das Lenkungssteuergerät für die Anwendung des Verfahrens gemäß Ansprüchen 1 bis 12 ausgelegt ist. Die zuvor genannten Vorteile gelten soweit übertragbar auch für die vorgestellte Lenkungsbaugruppenanordnung.

In weiterer bevorzugter Ausgestaltung der Erfindung ist vorgesehen, dass ein Computerprogrammprodukt für die Verwendung in dem Verfahren gemäß Ansprüchen 1 bis 13 bereitgestellt wird. Solch ein Computerprogrammprodukt umfasst dabei eine spezifische Steuergerätesoftware für ein Steuergerät, wobei die Steuergerätesoftware ein Erstellungsprogramm zum Erstellen eines Berechtigungscodes für eine Berechtigungsabfrageroutine der Steuergerätesoftware umfasst. Die zuvor genannten Vorteile gelten soweit übertragbar auch für das vorgestellte Computerprogrammprodukt.

In weiterer bevorzugter Ausgestaltung der Erfindung ist vorgesehen, dass ein Steuergerät mit einem Computerprogrammprodukt gemäß Anspruch 14 bereitgestellt wird. Die zuvor genannten Vorteile gelten soweit übertragbar auch für das vorgestellte Steuergerät.

Weitere bevorzugte Ausgestaltungen der Erfindung ergeben sich aus den übrigen, in den Unteransprüchen genannten Merkmalen.

Auch ist in einer weiteren Ausgestaltung der Erfindung vorgesehen, dass beim Vorhandensein von wenigstens zwei Komponenten jeweils zumindest ein Teilbereich der jeweiligen Komponentenidentifikationskennung dieser zwei Komponenten bei der Erstellung des Berechtigungscodes verwendet wird. Somit wird sichergestellt, dass die Basis für das Erstellen des Berechtigungscodes möglichst groß ist und somit ein besonders sicherer Schutz generierbar ist. Je mehr Komponenten und entsprechende Komponentenidentifikationskennungen als Basis zur Verfügung stehen, umso mehr Varianten für den Erstellungsschritt des Berechtigungscodes können generiert werden. Die Anzahl der Möglichkeiten ist somit für einen unberechtigten Nutzerkreis derart hoch, sodass ein illegaler Nutzungsversuch der Steuerungssoftware so gut wie keine Chance hätte.

Ferner ist in einer weiteren Ausgestaltung der Erfindung vorgesehen, dass das Erstellen des Berechtigungscodes mittels des Erstellungsprogramms der Steuergerätesoftware basierend auf dem Zugangscode und auf zumindest den gemäß des Zugangscodes ausgewählten Teilbereich der Komponentenidentifikationskennung der wenigstens einen Komponente und wenigstens eines individuellen Parameters der wenigstens einen Komponente vollzogen wird. Die zuvor genannten Vorteile sind somit noch besser zu erreichen. Derartige Parameter sind heutzutage elektronisch auslesbar und auf den meisten Komponenten vorhanden, sodass über eine Koppelung mit dem Steuergerät diese, entsprechend dem Verfahren, mit dem Auslesen der Komponentenidentifikationskennung der Komponente von dem Steuergerät ausgelesen und somit im Zuge des Verfahrens verwendet werden können.

Des Weiteren ist in einer weiteren Ausgestaltung der Erfindung vorgesehen, dass die zuvor genannten Verfahrensschritte zumindest teilweise während des Einbauens des Steuergeräts dokumentiert werden. Somit kann zusätzlich sichergestellt werden, dass im Falle eines Verlustes von relevanten Teilen, welche für das zuvor beschriebene Berechtigungsverfahren nötigt sind, aufgrund der Dokumentation des Herstellers ein Zugang zu der Steuerungssoftware jederzeit möglich ist.

Zudem ist in einer weiteren Ausgestaltung der Erfindung vorgesehen, dass die Komponentenidentifikationskennung der wenigstens einen Komponente eine individuelle Seriennummer dieser wenigstens einen Komponente ist. Die meisten Seriennummern sind dafür geschaffen, eine individuelle Zuordnung dieser Nummer genau zu dieser Komponente zu gewährleisten. Diese eindeutige Zuordnung ermöglicht somit gemäß dem vorgestellten Verfahren eine hochindividuelle Erstellungsroutine des Berechtigungscodes, sodass ein besonders sicheres Verfahren bereitstellbar ist. Beispielsweise kann solch eine Seriennummer für ausgewählte Komponenten beziehungsweise Hardwarebauteilen entsprechend in Silizium hinterlegt sein.

Auch ist in einer weiteren Ausgestaltung der Erfindung vorgesehen, dass die spezifische Baugruppenanordnung wenigstens eine Komponente umfasst, wobei die wenigstens eine Komponente zumindest eine Subkomponente umfasst, wobei die Subkomponente ausgewählt ist aus: Mikrocontrollereinheit, Leistungselektronikeinheit, Sensoreinheit. Die zuvor genannten Vorteile gelten soweit übertragbar auch für diese vorgestellte Variante der Erfindung.

Ferner ist in einer weiteren Ausgestaltung der Erfindung vorgesehen, dass das Steuergerät ein Lenkungssteuergerät von einer Lenkungsbaugruppe und die spezifische Baugruppenanordnung eine spezifische Lenkungsbaugruppenanordnung ist. Die zuvor genannten Vorteile gelten soweit übertragbar auch für diese vorgestellte Variante der Erfindung.

Des Weiteren ist in einer weiteren Ausgestaltung der Erfindung vorgesehen, dass die wenigstens eine Komponente eine Drehmoment-Sensor-Einheit ist. Die zuvor genannten Vorteile gelten soweit übertragbar auch für diese vorgestellte Variante der Erfindung.

Zudem ist in einer weiteren Ausgestaltung der Erfindung vorgesehen, dass der individuelle Parameter ein Wicklungswiderstandsparameter ist. Die zuvor genannten Vorteile gelten soweit übertragbar auch für diese vorgestellte Variante der Erfindung.

Schlussendlich ist in einer weiteren Ausgestaltung der Erfindung vorgesehen, dass der individuelle Parameter ein Magnetisierungsinformationsparameter ist. Die zuvor genannten Vorteile gelten soweit übertragbar auch für diese vorgestellte Variante der Erfindung.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Verfahrensablaufdiagramm von einem Verfahren zur Herstellung eines Softwarekopierschutzes für ein Steuergerät in einem Fahrzeug;
- Figur 2: eine schematische Darstellung von einem Steuergerät mit einem Computerprogrammprodukt.

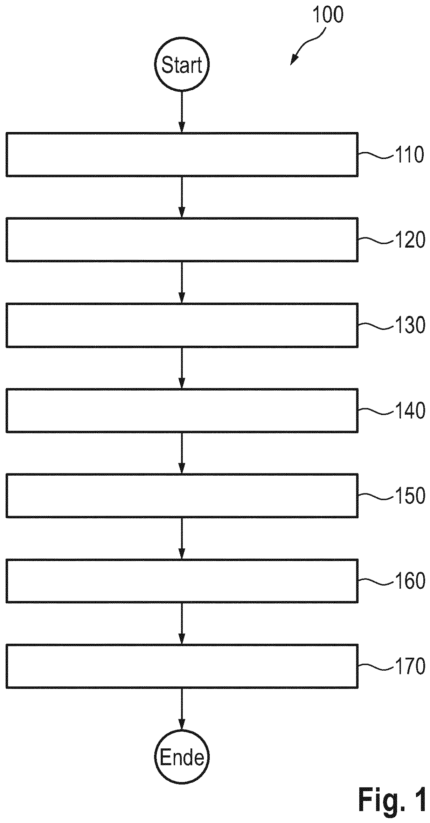

Figur 1 zeigt ein Verfahrensablaufdiagramm 100 von einem Verfahren zur Herstellung eines Softwarekopierschutzes für ein Steuergerät 10 in einem Fahrzeug. In einem ersten Verfahrensschritt 110 wird ein Steuergerät 10 mit einer spezifischen Steuergerätesoftware 14 bereitgestellt, wobei die Steuergerätesoftware 14 eine Berechtigungsabfrageroutine zur Verwendung der Steuergerätesoftware 14 umfasst. In einem zweiten Verfahrensschritt 120 wird das Steuergerät 10 in eine spezifische Baugruppenanordnung mit wenigstens einer Komponente in einem Fahrzeug eingebaut und das Steuergerät 10 wird mit der wenigstens einen Komponente gekoppelt, sodass eine erweiterte Baugruppenanordnung erstellt wird. In einem dritten Verfahrensschritt 130 wird eine eindeutige Komponentenidentifikationskennung der wenigstens einen Komponente mittels des Steuergeräts 10 ausgelesen. In einem vierten Verfahrensschritt 140 wird die eindeutige Komponentenidentifikationskennung der wenigstens einen Komponente auf dem Steuergerät 10 hinterlegt. In einem fünften Verfahrensschritt 150 wird ein Zugangscodes für eine Zugangsabfrageroutine eines Sonderspeicherbereichs des Steuergeräts 10, welcher zumindest teilweise auf einer während des Einbauens des Steuergeräts 10 erstellten eindeutigen Identifikationskennung der erweiterten Baugruppenanordnung basiert, bereitgestellt. In einem sechsten Verfahrensschritt 160 wird ein Berechtigungscode 18 mittels eines Erstellungsprogramms 16 der Steuergerätesoftware 14 erstellt, welcher auf dem Zugangscode und auf zumindest einen gemäß des Zugangscodes ausgewählten Teilbereichs der Komponentenidentifikationskennung der wenigstens einen Komponente basiert. In einem siebten Verfahrensschritt 170 wird der Berechtigungscode 18 in dem Sonderspeicherbereich mit Zugangsabfrageroutine des Steuergeräts 10 gespeichert und die Berechtigungsabfrageroutine der Steuergerätesoftware 14 in Verbindung mit dem Berechtigungscode 18 und der hinterlegten Komponentenidentifikationskennung aktiviert, sodass eine Berechtigung zur Verwendung der Steuergerätesoftware 14 nur in Abhängigkeit einer Kenntnis des Zugangscodes und einer Verwendung des Berechtigungscodes 18 ermöglicht wird.

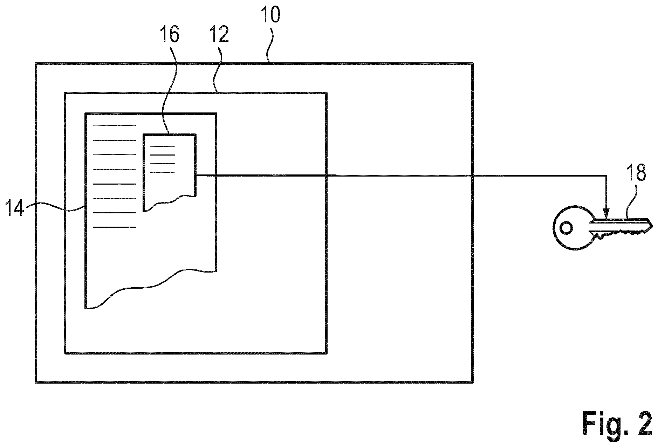

Figur 2 zeigt eine schematische Darstellung von einem Steuergerät 10 mit einem Computerprogrammprodukt 12. Das Computerprogrammprodukt 12 ist dabei für die Verwendung in dem Verfahren gemäß Ansprüchen 1 bis 13 ausgelegt. Das Computerprogrammprodukt 12 ist mit einer spezifischen Steuergerätesoftware 14 für das Steuergerät 10 dargestellt, wobei die Steuergerätesoftware 14 zudem mit einem Erstellungsprogramm 16 zum Erstellen eines Berechtigungscodes 18 für eine Berechtigungsabfrageroutine der Steuergerätesoftware 14 dargestellt ist.

### Bezugszeichenliste

- 10: Steuergerät
- 12: Computerprogrammprodukt
- 14: Steuergerätesoftware
- 16: Erstellungsprogramm
- 18: Berechtigungscode
- 100: Verfahrensablaufdiagramm
- 110: erster Verfahrensschritt
- 120: zweiter Verfahrensschritt
- 130: dritter Verfahrensschritt
- 140: vierter Verfahrensschritt
- 150: fünfter Verfahrensschritt
- 160: sechster Verfahrensschritt
- 170: siebter Verfahrensschritt

## Patentansprüche

1. Verfahren zur Herstellung eines Softwarekopierschutzes für ein Steuergerät (10) in einem Fahrzeug umfassend die folgenden Schritte:
• Bereitstellen eines Steuergeräts (10) mit einer spezifischen Steuergerätesoftware (14), wobei die Steuergerätesoftware (14) eine Berechtigungsabfrageroutine zur Verwendung der Steuergerätesoftware (14) umfasst;
• Einbauen des Steuergeräts (10) in eine spezifische Baugruppenanordnung mit wenigstens einer Komponente in einem Fahrzeug und Koppeln des Steuergeräts (10) mit der wenigstens einen Komponente, sodass eine erweiterte Baugruppenanordnung erstellt wird;
• Auslesen einer eindeutigen Komponentenidentifikationskennung der wenigstens einen Komponente mittels des Steuergeräts (10);
• Hinterlegen der eindeutigen Komponentenidentifikationskennung der wenigstens einen Komponente auf dem Steuergerät (10);
• Bereitstellen eines Zugangscodes für eine Zugangsabfrageroutine eines Sonderspeicherbereichs des Steuergeräts (10) basierend zumindest teilweise auf einer während des Einbauens des Steuergeräts (10) erstellten eindeutigen Identifikationskennung der erweiterten Baugruppenanordnung;
• Erstellen eines Berechtigungscodes (18) mittels eines Erstellungsprogramms (16) der Steuergerätesoftware (14) basierend auf dem Zugangscode und auf zumindest einen gemäß des Zugangscodes ausgewählten Teilbereich der Komponentenidentifikationskennung der wenigstens einen Komponente;
• Speichern des Berechtigungscodes (18) in dem Sonderspeicherbereich mit Zugangsabfrageroutine des Steuergeräts (10) und Aktivieren der Berechtigungsabfrageroutine der Steuergerätesoftware (14) in Verbindung mit dem Berechtigungscode (18) und der hinterlegten Komponentenidentifikationskennung, sodass eine Berechtigung zur Verwendung der Steuergerätesoftware (14) nur in Abhängigkeit einer Kenntnis des Zugangscodes und einer Verwendung des Berechtigungscodes (18) ermöglicht wird,
**dadurch gekennzeichnet, dass**
das Erstellen des Berechtigungscodes (18) mittels des Erstellungsprogramms (16) der Steuergerätesoftware (14) basierend auf dem Zugangscode und auf zumindest einen gemäß eines von dem Zugangscode vorgegebenen Zufallsprinzips ausgewählten Teilbereichs der Komponentenidentifikationskennung der wenigstens einen Komponente vollzogen wird, und der Berechtigungscode (18) zusätzlich in einem Redundanzspeicher von dem Steuergerät (10) gespeichert wird, wobei ein Zugang zu diesem Redundanzspeicher ausschließlich einem Hersteller der erweiterten Baugruppenanordnung ermöglicht wird.

2. Verfahren nach Anspruch 1, wobei beim Vorhandensein von wenigstens zwei Komponenten jeweils zumindest ein Teilbereich der jeweiligen Komponentenidentifikationskennung dieser zwei Komponenten bei der Erstellung des Berechtigungscodes (18) verwendet wird.

3. Verfahren nach einem der vorherigen Ansprüche, wobei das Erstellen des Berechtigungscodes (18) mittels des Erstellungsprogramms (16) der Steuergerätesoftware (14) basierend auf dem Zugangscode und auf zumindest den gemäß des Zugangscodes ausgewählten Teilbereich der Komponentenidentifikationskennung der wenigstens einen Komponente und wenigstens eines individuellen Parameters der wenigstens einen Komponente vollzogen wird.

4. Verfahren nach einem der vorherigen Ansprüche, wobei die zuvor genannten Verfahrensschritte zumindest teilweise während des Einbauens des Steuergeräts (10) dokumentiert werden.

5. Verfahren nach einem der vorherigen Ansprüche, wobei die Komponentenidentifikationskennung der wenigstens einen Komponente eine individuelle Seriennummer dieser wenigstens einen Komponente ist.

6. Verfahren nach einem der vorherigen Ansprüche, wobei die spezifische Baugruppenanordnung wenigstens eine Komponente umfasst, wobei die wenigstens eine Komponente zumindest eine Subkomponente umfasst, wobei die Subkomponente ausgewählt ist aus: Mikrocontrollereinheit, Leistungselektronikeinheit, Sensoreinheit.

7. Verfahren nach einem der vorherigen Ansprüche, wobei das Steuergerät (10) ein Lenkungssteuergerät von einer Lenkungsbaugruppe und die spezifische Baugruppenanordnung eine spezifische Lenkungsbaugruppenanordnung ist.

8. Verfahren nach Anspruch 7, wobei die wenigstens eine Komponente eine Drehmoment-Sensor-Einheit ist.

9. Verfahren nach Anspruch 7, wobei der individuelle Parameter ein Wicklungswiderstandsparameter ist.

10. Verfahren nach Anspruch 7, wobei der individuelle Parameter ein Magnetisierungsinformationsparameter ist.

11. Lenkungsbaugruppenanordnung mit einem Lenkungssteuergerät, wobei das Lenkungssteuergerät für die Anwendung des Verfahrens gemäß Ansprüchen 1 bis 10 ausgelegt ist.

12. Computerprogrammprodukt (12), umfassend Befehle, die bei der Ausführung des Programms durch einen Computer diesen veranlassen, das Verfahren nach nach einem der Ansprüche 1 bis 10 auszuführen, das Computerprogrammprodukt (12) umfassend eine spezifische Steuergerätesoftware (14) für ein Steuergerät (10), wobei die Steuergerätesoftware (14) ein Erstellungsprogramm (16) zum Erstellen eines Berechtigungscodes (18) für eine Berechtigungsabfrageroutine der Steuergerätesoftware (14) umfasst.

13. Steuergerät (10) mit einem Computerprogrammprodukt (12) gemäß Anspruch 12.

## Claims

1. A method of production of software copy protection for a control apparatus (10) in a vehicle, comprising the following steps:
• providing a control apparatus (10) with specific control apparatus software (14), wherein the control apparatus software (14) comprises an authorization query routine for using the control apparatus software (14);
• incorporating the control apparatus (10) into a specific assembly arrangement with at least one component in a vehicle, and coupling the control apparatus (10) to the at least one component such that an extended assembly arrangement is created;
• reading out a unique component identifier of the at least one component by means of the control apparatus (10);
• storing the unique component identifier of the at least one component on the control apparatus (10);
• providing an access code for an access query routine of a special memory area of the control apparatus (10) based at least in part on a unique identifier of the extended assembly arrangement created during installation of the control apparatus (10);
• creating an authorization code (18) by means of a creation program (16) of the control apparatus software (14) based on the access code and on at least one partial area of the component identifier of the at least one component selected in accordance with the access code;
• storing the authorization code (18) in the special memory area with access query routine of the control apparatus (10), and activating the authorization query routine of the control apparatus software (14) in connection with the authorization code (18) and the stored component identifier, so that authorization to use the control apparatus software (14) is enabled only in dependence on knowledge of the access code and use of the authorization code (18),
**characterized in that**
the authorization code (18) is created by means of the creation program (16) of the control apparatus software (14) based on the access code and on at least one partial area of the component identifier of the at least one component selected in accordance with a random principle predetermined by the access code, and the authorization code (18) is additionally stored in a redundancy memory by the control apparatus (10), wherein access to this redundancy memory is made possible exclusively for a manufacturer of the extended assembly arrangement.

2. The method according to claim 1, wherein, in the presence of at least two components, at least one partial area of the relevant component identifier of these two components is used in each case in the creation of the authorization code (18).

3. The method according to any of the preceding claims, wherein the creation of the authorization code (18) is accomplished by means of the creation program (16) of the control apparatus software (14) based on the access code and on at least the partial area of the component identifier of the at least one component and at least one individual parameter of the at least one component selected in accordance with the access code.

4. The method according to any of the preceding claims, wherein the aforementioned method steps are at least partially documented during installation of the control apparatus (10).

5. The method according to any of the preceding claims, wherein the component identifier of the at least one component is an individual serial number of this at least one component.

6. The method according to any of the preceding claims, wherein the specific assembly arrangement comprises at least one component, wherein the at least one component comprises at least one subcomponent, wherein the subcomponent is selected from: microcontroller unit, power electronics unit, sensor unit.

7. The method according to any of the preceding claims, wherein the control apparatus (10) is a steering control apparatus of a steering assembly and the specific assembly arrangement is a specific steering assembly arrangement.

8. The method according to claim 7, wherein the at least one component is a torque sensor unit.

9. The method according to claim 7, wherein the individual parameter is a winding resistance parameter.

10. The method according to claim 7, wherein the individual parameter is a magnetization information parameter.

11. A steering assembly arrangement comprising a steering control apparatus, wherein the steering control apparatus is adapted for use of the method according to claims 1 to 10.

12. A computer program product (12) comprising commands which, when the program is executed by a computer, cause the computer to execute the method according to according to any of claims 1 to 10, the computer program product (12) comprising specific control apparatus software (14) for a control apparatus (10), wherein the control apparatus software (14) comprises a creation program (16) for creating an authorization code (18) for an authorization query routine of the control apparatus software (14).

13. A control apparatus (10) comprising a computer program product (12) according to claim 12.

## Revendications

1. Procédé de production d'une protection contre la copie de logiciel pour un appareil de commande (10) dans un véhicule, comprenant les étapes suivantes :
• fourniture d'un appareil de commande (10) comportant un logiciel d'appareil de commande (14) spécifique, dans lequel le logiciel d'appareil de commande (14) comprend une routine de demande d'autorisation pour l'utilisation du logiciel d'appareil de commande (14) ;
• montage de l'appareil de commande (10) dans un agencement de modules spécifique comportant au moins un composant dans un véhicule et couplage de l'appareil de commande (10) à l'au moins un composant, de sorte qu'un agencement de modules étendu est créé ;
• lecture d'un identifiant d'identification de composant unique de l'au moins un composant au moyen de l'appareil de commande (10) ;
• enregistrement de l'identifiant d'identification de composant unique de l'au moins un composant sur l'appareil de commande (10) ;
• fourniture d'un code d'accès pour une routine de demande d'accès d'une zone de mémoire spéciale de l'appareil de commande (10) sur la base au moins en partie d'un identifiant d'identification unique, créé pendant le montage de l'appareil de commande (10), de l'agencement de modules étendu ;
• création d'un code d'autorisation (18) au moyen d'un programme de création (16) du logiciel d'appareil de commande (14) sur la base du code d'accès et d'au moins une zone partielle, choisie conformément au code d'accès, de l'identifiant d'identification de composant de l'au moins un composant ;
• mémorisation du code d'autorisation (18) dans la zone de mémoire spéciale avec la routine de demande d'accès de l'appareil de commande (10) et activation de la routine de demande d'autorisation du logiciel d'appareil de commande (14) en liaison avec le code d'autorisation (18) et l'identifiant d'identification de composant enregistré, de sorte qu'une autorisation d'utilisation du logiciel d'appareil de commande (14) n'est possible qu'en fonction d'une connaissance du code d'accès et d'une utilisation du code d'autorisation (18),
**caractérisé en ce que**
la création du code d'autorisation (18) au moyen du programme de création (16) du logiciel d'appareil de commande (14) est effectuée sur la base du code d'accès et d'au moins une zone partielle, choisie conformément à un principe aléatoire prédéfini par le code d'accès, de l'identifiant d'identification de composant de l'au moins un composant, et le code d'autorisation (18) est en outre mémorisé dans une mémoire redondante par l'appareil de commande (10), dans lequel un accès à ladite mémoire redondante est possible uniquement pour un fabricant de l'agencement de modules étendu.

2. Procédé selon la revendication 1, dans lequel, en présence d'au moins deux composants, respectivement au moins une zone partielle de l'identifiant d'identification de composant respectif desdits deux composants est utilisée lors de la création du code d'autorisation (18).

3. Procédé selon l'une des revendications précédentes, dans lequel la création du code d'autorisation (18) au moyen du programme de création (16) du logiciel d'appareil de commande (14) est effectuée sur la base du code d'accès et d'au moins la zone partielle, choisie conformément au code d'accès, de l'identifiant d'identification de composant de l'au moins un composant et d'au moins un paramètre individuel de l'au moins un composant.

4. Procédé selon l'une des revendications précédentes, dans lequel les étapes de procédé mentionnées précédemment sont documentées au moins en partie pendant le montage de l'appareil de commande (10).

5. Procédé selon l'une des revendications précédentes, dans lequel l'identifiant d'identification de composant de l'au moins un composant est un numéro de série individuel dudit au moins un composant.

6. Procédé selon l'une des revendications précédentes, dans lequel l'agencement de modules spécifique comprend au moins un composant, dans lequel l'au moins un composant comprend au moins un sous-composant, dans lequel le sous-composant est choisi parmi : unité de microcontrôleur, unité d'électronique de puissance, unité de capteur.

7. Procédé selon l'une des revendications précédentes, dans lequel l'appareil de commande (10) est un appareil de commande de direction d'un module de direction et l'agencement de modules spécifique est un agencement de modules de direction spécifique.

8. Procédé selon la revendication 7, dans lequel l'au moins un composant est une unité de capteur de couple.

9. Procédé selon la revendication 7, dans lequel le paramètre individuel est un paramètre de résistance de l'enroulement.

10. Procédé selon la revendication 7, dans lequel le paramètre individuel est un paramètre d'informations de magnétisation.

11. Agencement de modules de direction comportant un appareil de commande de direction, dans lequel l'appareil de commande de direction est configuré pour l'application du procédé conformément aux revendications 1 à 10.

12. Produit programme informatique (12), comprenant des instructions qui, lors de l'exécution du programme par un ordinateur, amènent celui-ci à exécuter le procédé selon selon l'une des revendications 1 à 10, le produit programme informatique (12) comprenant un logiciel d'appareil de commande (14) spécifique pour un appareil de commande (10), dans lequel le logiciel d'appareil de commande (14) comprend un programme de création (16) pour la création d'un code d'autorisation (18) pour une routine de demande d'autorisation du logiciel d'appareil de commande (14).

13. Appareil de commande (10) comportant un produit programme informatique (12) conformément à la revendication 12.
